# EUROPÄISCHE PATENTSCHRIFT

(11) **EP 2 813 314 B1**
(45) Veröffentlichungstag und Bekanntmachung des Hinweises auf die Patenterteilung: **07.03.2018**
(21) Anmeldenummer: 13002961.4
(22) Anmeldetag: 10.06.2013
(51) Int. Cl.: B23K 20/12, B23K 20/22

(54) **Reibrührwerkzeug und Reibrührverfahren für ein Werkstück mit Oberflächenbeschichtung**
Friction stir welding tool and method for a coated workpiece
Outil et procédé de friction-malaxage pour une pièce comprenant un revêtement

(43) Veröffentlichungstag der Anmeldung: 17.12.2014
(73) Patentinhaber: Airbus Defence and Space GmbH, 85521 Ottobrunn (DE)
(72) Erfinder: Silvanus, Jürgen, 82008 Unterhaching (DE); Brunzel, Tommy, 08393 Meerane (DE)
(74) Vertreter: Kastel, Stefan

(56) Entgegenhaltungen:
- US-A1- 2003 201 307
- US-A1- 2007 039 154
- US-A1- 2008 296 350
- US-A1- 2009 120 995

## Beschreibung

Die Erfindung betrifft ein Reibrührwerkzeug mit einer an einem Körper ausgebildeten Schulter, die eine Reiboberfläche zum Anpressen an wenigstens ein wenigstens teilweise mit einer Oberflächenbeschichtung versehenes Werkstück hat. Weiter betrifft die Erfindung eine mit einem solchen Reibrührwerkzeug versehene Reibrührvorrichtung. Schließlich betrifft die Erfindung ein damit durchführbares Reibrührverfahren, insbesondere ein Reibrührschweißverfahren.

Die Erfindung liegt auf dem Gebiet des Reibrührens und insbesondere des Reibrührschweißens. Das Reibrührschweißen oder "friction stir welding" (FSW) wird zunehmend in der Luft- und Raumfahrttechnik, in der Schienenverkehrstechnik, Unterhaltungselektronik, sowie im Automobilbau eingesetzt. Es handelt sich um ein einfaches, sauberes und innovatives Fügeverfahren, das sich durch ein hohes Automatisierungspotenzial und einen hohen Wirkungsgrad auszeichnet, wodurch die Herstellungskosten gesenkt werden und das Gewicht daraus hergestellter Strukturen reduziert wird.

Das Reibrührschweißen wurde erstmals in der WO 93/19935 beschrieben. Dabei werden zwei miteinander zu verschweißende Werkstücke in Kontakt gebracht und in dieser Position gehalten. In den Verbindungsbereich der Werkstücke wird unter drehender Bewegung ein Schweißstift bzw. ein stiftförmiger Vorsprung eines entsprechenden Werkzeuges eingeführt, bis eine oberhalb des Schweißstiftes an dem Werkzeug angeordnete Schulter auf der Oberfläche der Werkstücke aufliegt. Dabei wird durch die Relativbewegung zwischen Werkzeug und Werkstücken Reibungswärme erzeugt, sodass benachbarte Werkstoffbereiche im Verbindungsbereich einen plastifizierten Zustand einnehmen. Das Werkzeug wird, während der rotierende Schweißstift in Kontakt mit dem Verbindungsbereich steht, entlang einer Verbindungslinie der Werkstücke vorwärts bewegt, sodass der sich um den Schweißstift befindende Werkstoff plastifiziert und anschließend konsolidiert. Bevor das Material völlig erhärtet, wird der Schweißstift aus dem Verbindungsbereich beziehungsweise den Werkstücken entfernt.

Materialien, wie beispielsweise Metalle, deren Legierungen, Metallverbundmaterialen - sogenannte MMCs - oder geeignete Kunststoffmaterialien können auf diese Weise als Stumpfstoß-, Überlappstoß- oder T-Stoß-Verbindung verschweißt werden. Es können auch Punktverbindungen erzeugt werden, wobei eine Vorwärtsbewegung des Rotieren mit dem Verbindungsbereich in Kontakt stehenden Schweißstiftes beziehungsweise eine translatorische Relativbewegung zwischen rotierendem Schweißstift und Werkstücken nicht erfolgt.

Die Technik des Reibrührens - Englisch "friction stir processing" - findet aber auch beim Reparieren, Bearbeiten und Veredeln von Werkstücken Anwendung. Dabei wird, wie oben beschrieben, ein stiftförmiger Vorsprung unter drehender Bewegung in zumindest ein Werkstück eingeführt (d. h. es wird im Vollem geschweißt), um das Werkstück wenigstens im Kontaktbereich des Schweißstiftes zu modifizieren. Zu Reparaturzwecken wird der rotierende Schweißstift beispielsweise in einen Riss eines Werkstückes eingeführt.

In der DE 10 2005 030 800 B4 ist ein Reibrührwerkzeug zum Reibrührschweißen zwecks Verbinden eines ersten Werkstückes und eines zweiten Werkstückes entlang einer Schweißnaht als Verbindungslinie und ein entsprechendes Reibrührschweißverfahren bekannt. Bei diesem bekannten Verfahren sind der Stift und die Schulter oder ein die Schulter tragender Körper des Werkzeuges relativ zueinander drehbar. Insbesondere wird beim Schweißen die Schulter festgehalten, sodass sie keine Drehbewegung durchführt (Drehzahl n = 0). Dadurch wird weniger Reibwärme im Bereich der Oberfläche erzeugt.

Durch dieses aus der DE 10 2005 030 800 B4 bekannte Schweißverfahren und das entsprechende Werkzeug ergeben sich viele neue mögliche Schweißaufgaben, wie beispielsweise die Verbindung von Werkstücken ganz unterschiedlicher Materialkonsistenz. Es können nun beispielsweise Metalle mit niedrigen Schmelztemperaturen mit Metallen mit höheren Schmelztemperaturen verschweißt werden. Dies ist insbesondere dadurch möglich, dass die Reibwärme besser kontrollierbar ist und somit das früher aufweichende Material in einem plastifizierten und nicht flüssigen Zustand gehalten werden kann. So sind beispielsweise sogar Verbindungen zwischen Aluminium-Werkstücken mit Titan-Werkstücken möglich. Auch Mischverbindungen Aluminium-Stahl sind möglich.

Wenn allerdings Werkstücke mit einer Oberflächenbeschichtung im ReibrührVerfahren bearbeitet werden, dann führt dies aufgrund der Relativbewegung zwischen Schulter und Werkstück dazu, dass die Oberflächenbeschichtung beschädigt wird.

Beispielsweise kann mit dem in der DE 10 2005 030 800 B4 beschriebenen Reibrührwerkzeug und den darin beschriebenen Reibrührschweißverfahren ein Verschweißen zwischen einem verzinktem Stahlblech und einem Aluminiumblech erfolgen. Das Reiben der Schulter beim Vorschub des Reibrührwerkzeuges über die Verbindungslinie beschädigt allerdings in vielen Fällen die Zinkschicht des Stahlblechs.

Aus der US 2008/0296350 A1 ist ein Reibrührwerkzeug mit drehbar angetriebenem Werkzeugkörper bekannt, an dem eine Schulter vorgesehen ist. Um einen Reibrührprozess auch an gekrümmten Bauteilen mit entsprechend gekrümmter Oberfläche durchführen zu können, ist die Oberfläche der Schulter formanpassbar gehalten. Hierzu ist die Schulteroberfläche flexibel gestaltet und beispielsweise durch ein Stützelement in Form eines verformbaren Körpers gestützt. Bei einer anderen Ausgestaltung wird ein Druck auf die Schulteroberfläche je nach Ort unterschiedlich eingestellt. Demnach ist die Schulteroberfläche bei diesem Stand der Technik elastisch ausgebildet oder derart ausgebildet, dass ein Druck lokal veränderbar ist. Durch Verringerung eines Drucks würde sich theoretisch auch eine Verminderung der Reibung der Oberfläche ergeben können; demnach ist die flexible Schulter grundsätzlich dazu geeignet, eine Reibung an der Schulteroberfläche zu vermindern. Außerdem ist eine weitere Reibverminderungseinrichtung in Form einer reibmindernden Beschichtung der Schulteroberfläche erwähnt.

Aus der US 2009/0120995 A1 ist ein Reibrührwerkzeug zum Laminieren dünner Bleche bekannt. Als Anwendungszweck ist die Verbindung zweier dünner Metallbleche mit einer uranhaltigen Zwischenlage beschrieben, um so eine Brennstoffplatte für einen Kernreaktor zu schaffen. Als problematisch wird angesehen, dass bei bisherigen Reibrührverfahren die Oberfläche nicht plan genug ist, so dass zusätzlich mechanisch poliert werden muss. Es wird daher ein Reibrührwerkzeug mit einer ersten, mitdrehenden Schulter vorgeschlagen und mit einer zweiten Schulter, die axial zurückversetzt zu der ersten Schulter ist und sich nicht mitdrehen muss. Als Reibfläche wirkt lediglich die Oberfläche der ersten Schulter; die Oberfläche der zweiten Schulter verhindert nur beim Ausfalten eines dünnen Blechs ein weiteres Aufwerfen.

Aus der US 2003/0201307 A1 ist ein Zweischulterwerkzeug bekannt, bei dem die Werkstücke zwischen zwei Schultern eingespannt werden können. Die Druckkräfte, mit denen die Schultern das Werkzeug zwischen sich einspannen, können kontrolliert werden und vermindert werden, wenn ein vorgegebener Wert überstiegen wird, und vergrößert werden, wenn ein vorgegebener Wert unterschritten wird. Bei einer Verringerung des Drucks würde sich entsprechend auch eine Verminderung des Reibwiderstandes an der Oberfläche der entsprechenden Schulter ergeben, was aber nicht explizit ausgeführt ist.

Aus der US 2007/0039154 A1 ist ein Reibrühr-Punktschweißverfahren zum Verbinden eines verzinkten Stahlblechs mit einem Aluminiumblech bekannt. Dabei erfolgt das Reibrühren von Seiten des Aluminiumbleches aus, wobei ein mit Stift und Schulter versehenes Werkzeug durch die Aluminiumlage hindurch bis zu der Zinkschicht des Stahles, welcher sich zwischen dem Stahl und dem Aluminium befindet, hindurch durchgeführt wird, um diese Zinkschicht zu zerstören und eine Verbindung zwischen Aluminium und Stahl herbeizuführen. Es wird hier auf der gegenüberliegenden Seite des verzinkten Stahlblechs eine großflächige Unterstützung durch ein Zwischenlageelement vorgeschlagen, um auf dieser gegenüberliegenden Seite eine Ablösung der Zinkschicht bei diesem Punktschweißprozess zu vermeiden.

Allgemein tritt bei der Anwendung von Reibrührschweißprozessen oder allgemeinen Reibrührprozessen an beschichteten Fügeteilen beziehungsweise Werkstücken eine Verletzung der Beschichtung durch die Schulter des Reibrührwerkzeuges, wie beispielsweise Schweißwerkzeuges, auf.

Bisher wird die Beschichtung der Fügeteile beziehungsweise des Werkstückes im Schweißbereich nach erfolgter Verschweißung lokal erneut aufgebracht.

Die Erfindung hat sich zur Aufgabe gestellt, Reibrührverfahren an beschichteten Werkstücken prozesstechnisch einfacher zu gestalten.

Diese Aufgabe wird durch ein Reibrührwerkzeug mit den Merkmalen des Anspruchs 1, eine damit versehene Reibrührvorrichtung sowie durch ein Reibrührverfahren mit den Schritten des Nebenanspruches gelöst.

Vorteilhafte Ausgestaltungen der Erfindung sind Gegenstand der Unteransprüche.

Gemäß einem ersten Aspekt schafft die Erfindung ein Reibrührwerkzeug mit einer an einem Körper ausgebildeten Schulter, die eine Reiboberfläche zum Anpressen an wenigstens ein wenigstens teilweise mit einer Oberflächenbeschichtung versehenes Werkstück hat, und einer Reibverminderungseinrichtung zur Verminderung des Reibwiderstands zwischen der Oberflächenbeschichtung und der Reiboberfläche.

Durch die Verminderung des Reibwiderstandes an dem Reiboberflächenbereich lassen sich Verletzungen von Beschichtungen eines zu bearbeitenden Werkstückes verringern oder vermeiden, sodass ein nachträgliches erneutes lokales Aufbringen der Beschichtung vermieden werden kann.

Gemäß einer bevorzugten Ausgestaltung der Erfindung wird hierzu ein mit der Oberflächenbeschichtung des zu bearbeitenden Werkstoffs in Kontakt kommender Bereich der Schulter nachgiebiger als die Oberflächenbeschichtung ausgebildet.

Es ist bevorzugt, dass die Reibverminderungseinrichtung wenigstens ein Stützelement zum Stützen zumindest eines Teilbereichs der Reiboberfläche derart aufweist, das zumindest der Teilbereich der Reiboberfläche nachgiebiger als die Oberflächenbeschichtung der Reiboberfläche ist.

Vorzugsweise ist die Reibverminderungseinrichtung derart ausgebildet, dass selektiv die Reibkräfte bzw. die Reibbelastung an einem Teilbereich der Reiboberfläche der Schulter niedriger als an einem anderen Teilbereich der Reiboberfläche der Schulter gehalten wird.

Insbesondere schafft die Erfindung ein Reibrührschweißwerkzeug mit mehrteiliger Werkzeugschulter.

Dies ist insbesondere für ein Reibrührschweißen von Mischverbindungen vorteilhaft, bei denen ein Werkstück mit einer empfindlichen Oberflächenbeschichtung versehen ist und ein anderes Werkstück nicht.

Beispielsweise ist ein erstes Werkstück aus verzinktem Stahlblech gebildet, welches an ein zweites Werkstück aus Aluminium anzuschweißen ist.

Es gibt viele weitere mögliche Beispiele von Paaren von ersten und zweiten Werkstücken, von denen ein erstes Werkstück mit einer Oberflächenbeschichtung versehen ist.

Es ist bevorzugt, dass das Reibrührwerkzeug mit einer an einem Körper ausgebildeten Schulter versehen ist, die eine Reiboberfläche zum Anpressen an ein erstes und zweites miteinander zu verbindendes Werkstück aufweist.

Es ist vorgesehen, dass die Reiboberfläche einen ersten und einen zweiten Oberflächenbereich umfasst und dass die Reibverminderungseinrichtung nur an einem Teilbereich des Körpers derart ausgebildet ist, dass der Reibwiderstand an dem ersten Oberflächenbereich der Reiboberfläche geringer als der Reibwiderstand an dem zweiten Oberflächenbereich der Reiboberfläche ist.

Mit dem ersten Oberflächenbereich kann das mit der Oberflächenbeschichtung versehene erste Werkstück erfasst werden, während die vertikalen Prozesskräfte mehr über den zweiten Oberflächenbereich übertragbar sind.

Die Verminderung der Reibung kann auf unterschiedliche Weise erfolgen. Denkbar ist das Versehen mit einer reibmindernden Schicht. Vorzugsweise sind jedoch die vertikalen Anpresskräfte an dem ersten Oberflächenbereich geringer als an dem anderen Oberflächenbereich. Dies lässt sich durch eine größere Nachgiebigkeit des ersten Oberflächenbereichs gegenüber dem zweiten Oberflächenbereich erzielen.

Es ist bevorzugt, dass ein Stützelement zum Stützen des ersten Oberflächenbereichs vorgesehen ist, das weicher oder nachgiebiger als ein Untergrund des zweiten Oberflächenbereichs ist.

Es ist bevorzugt, dass der erste Oberflächenbereich an einem aus einem Kunststoffmaterial gebildeten Bereich des Körpers ausgebildet ist und der zweite Oberflächenbereich an einem Metall- und/oder Keramikmaterial ausgebildeten Bereich des Körpers ausgebildet ist.

Gemäß einer Ausführungsform ist vorgesehen, dass der erste Oberflächenbereich durch eine erste Hälfte der Reiboberfläche gebildet ist und dass der zweite Oberflächenbereich durch die zweite Hälfte der Reiboberfläche gebildet ist.

Eine solche Ausführungsform ist insbesondere für Reibrührschweißverfahren vorteilhaft, bei denen ein Verfahren des Reibrührwerkzeugs mittig zur Verbindungslinie zwischen den Werkstücken erfolgt.

Gemäß einer weiteren Ausführungsform ist vorgesehen, dass einer der Oberflächenbereiche, vorzugsweise der erste Oberflächenbereich, auf einem Teilsegment der Reiboberfläche ausgebildet ist, das weniger als die Hälfte der Reiboberfläche einnimmt.

Es ist bevorzugt, dass eine den ersten Oberflächenbereich vom zweiten Oberflächenbereich trennende Trennlinie außermittig zur Reiboberfläche verläuft. Vorzugsweise ist die Trennlinie derart angeordnet, dass der zweite Oberflächenbereich sich um einen vorgegebenen Abstand über eine in einer Vorschubrichtung für das Reibrührwerkzeug anordenbare Mittellinie der Reiboberfläche hinaus erstreckt.

Ausführungsformen mit einer außermittigen Trennung zwischen Oberflächenbereichen sind z.B. für Reibrührschweißverfahren vorteilhaft, bei denen die Schulter außermittig zu einer Verbindungslinie zwischen Werkstücken angesetzt und verfahren wird. Dies ist z.B. vorteilhaft beim Verschweißen von Werkstücken aus Materialien mit sich deutlich unterscheidenden Schmelzpunkten. Das Material mit dem geringeren Schmelzpunkt plastifiziert bei geringeren Temperaturen als das Material mit dem höheren Schmelzpunkt. Daher kann ein außermittiges Ansetzen und Verfahren je nach Materialzusammensetzung sinnvoll sein; entsprechend ist es vorteilhaft, die Verteilung der Oberflächenbereiche anzupassen.
Es ist bevorzugt, dass ein von der Schulter vorstehender, rotierend antreibbarer Stift vorgesehen ist, der relativ zu der Schulter drehbar ist.

Es ist bevorzugt, dass die Schulter dazu ausgebildet ist, während eines Reibrührschweißverfahrens zum Verbinden eines ersten und eines zweiten Werkstückes entlang einer Schweißnaht mit einer Drehzahl n = 0 auf die Oberfläche des ersten und/oder des zweiten Werkstückes aufgepresst zu werden.

Gemäß einem weiteren Aspekt schafft die Erfindung eine Reibrührvorrichtung umfassend ein Reibrührwerkzeug gemäß einer der zuvor erläuterten Ausführungsformen und eine Werkzeugführungseinrichtung zum Führen und Bewegen des Reibrührwerkzeuges in eine Vorschubrichtung.

Besonders bevorzugt ist die Reibrührvorrichtung eine Reibrührschweißvorrichtung, wobei die Werkzeugführungseinrichtung dazu ausgebildet ist, das Reibrührwerkzeug entlang einer Verbindungslinie zwischen miteinander zu verbindenden Werkstücken zum Bilden einer Schweißnaht zu führen.

Gemäß einem weiteren Aspekt schafft die Erfindung ein Reibrührverfahren zum Durchführen eines Reibrührprozesses an wenigstens einem mit einer Oberflächenbeschichtung versehenen Werkstück, mit:
Verwenden eines Reibrührwerkzeugs gemäß einer der zuvor erläuterten Ausführungsformen, wobei die Schulter abhängig von der Oberflächenbeschichtung derart ausgewählt und/oder ausgebildet wird, dass sie beim Aufpressen auf die Oberflächenbeschichtung und beim Verfahren auf der Oberflächenbeschichtung in eine Vorschubrichtung während des Reibrührprozesses diese nicht beschädigt oder zumindest nicht vollständig abträgt oder durchdringt.

Es ist bevorzugt, dass das Reibrührverfahren ein Reibrührschweißverfahren zum Verbinden eines ersten Werkstücks und eines zweiten Werkstücks mittels Reibrühren entlang einer Schweißnaht ist, wobei das erste Werkstück mit einer Oberflächenbeschichtung versehen ist, und dass das Reibrührverfahren weiter umfasst: Erfassen der Oberflächenbeschichtung mit dem ersten Oberflächenbereich und Übertragen von axialen Kräften mittels des zweiten Oberflächenbereichs.

Eine besonders bevorzugte Ausgestaltung des Reibrührschweißverfahrens ist gekennzeichnet durch Verbinden eines aus verzinktem Stahl gebildeten ersten Werkstücks mit einem aus einem Leichtmetall gebildeten zweiten Werkstück entlang der Schweißnaht unter Pressen des ersten Oberflächenbereichs auf die Zinkschicht des ersten Werkstücks und Pressen des zweiten Oberflächenbereichs auf das Leichtmetall des zweiten Werkstücks.

Eine weitere bevorzugte Ausgestaltung des Reibrührschweißverfahrens ist gekennzeichnet durch Verwenden eines Reibrührwerkzeugs mit außermittiger Trennlinie zwischen ersten und zweiten Oberflächenbereich und Durchführen des Reibrührschweißverfahren mit relativ zu der Verbindungslinie zwischen ersten Werkstück und zweiten Werkstück mehr zu dem zweiten Werkstück hin versetzt in Vorschubrichtung zu verfahrendem Reibrührwerkzeug, wobei der Abstand der Trennlinie von der Mittellinie in Abhängigkeit von den zu verbindenden Materialien derart gewählt wird, dass sich die Trennlinie im Nahbereich der Schweißnaht halten lässt. Vorzugsweise ist die Trennlinie genau am Übergang zwischen weiterhin oberflächenbeschichtem Werkstückoberflächenbereich und plastifiziertem Schweißnahtbereich zu halten und der Abstand X zu wählen.

Ausführungsbeispiele der Erfindung werden nachfolgend anhand der beigefügten Zeichnungen näher erläutert.

Darin zeigen
- Fig. 1: eine schematische Darstellung eines ersten Werkstückes mit einer Oberflächenbeschichtung und eines zweiten Werkstückes, welche entlang einer Verbindungslinie durch ein Reibrührschweißverfahren miteinander zu verbinden sind;
- Fig. 2: eine schematische Darstellung eines Reibrührwerkzeuges zum Durchführen eines Reibrührverfahrens in Form eines Reibrührschweißverfahrens zum Verbinden der in Figur 1 dargestellten Werkstücke;
- Fig. 3: eine Draufsicht auf eine erste Ausführungsform des in Figur 2 in Seitenansicht gezeigten Reibrührwerkzeuges;
- Fig. 4: eine Draufsicht auf eine zweite Ausführungsform des in Figur 2 in Seitenansicht gezeigten Reibrührwerkzeuges;
- Fig. 5: eine schematische Darstellung einer Reibrührvorrichtung zum Durchführen des Reibrührprozesses unter Verwendung der in den Figuren 2 und 3 dargestellten Ausführungsformen des Reibrührwerkzeuges; und
- Fig. 6: eine schematische vereinfachte Darstellung eines mit der Reibrührvorrichtung nach Fig. 4 durchzuführenden Reibrührschweißverfahrens zum Verbinden der in Fig. 1 dargestellten Werkstücke.

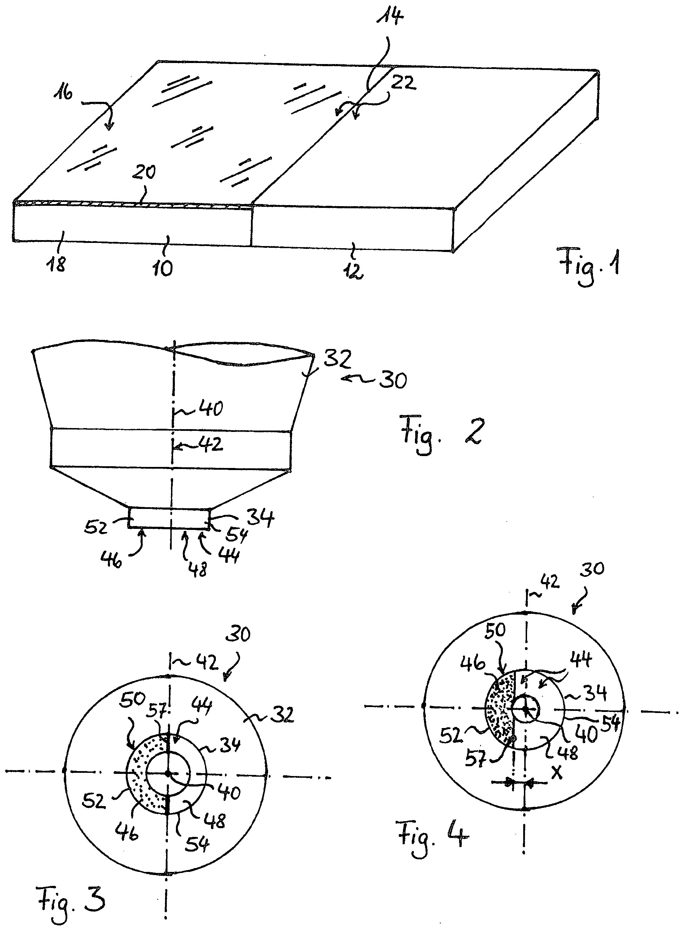

In Fig. 1 sind ein erstes Werkstück 10 und ein zweites Werkstück 12 gezeigt, die entlang eines Verbindungsbereiches 14 durch einen Reibrührprozess verschweißt werden sollen. Das erste Werkstück 10 ist dabei mit einer Oberflächenbeschichtung 16 versehen.

In einem Beispiel ist das erste Werkstück 10 durch ein verzinktes Stahlblech 18 gebildet, bei dem die Oberflächenbeschichtung 16 durch eine Zinkschicht 20 gebildet ist.

Das zweite Werkstück 12 kann ein beliebiges entsprechend mit dem Stahlblech 18 verbindbares Werkstück sein. Zum Beispiel ist das zweite Werkstück 12 aus einem Leichtmetall, wie beispielsweise einer Aluminiumlegierung oder dergleichen gebildet.

In den Figuren 2, 3 und 4 ist ein Teilelement eines Reibrührwerkzeuges 30 zum Durchführen des Reibrührschweißverfahrens zum Verbinden des ersten Werkstückes 10 und des zweiten Werkstückes 12 entlang des Verbindungsbereichs 14 gezeigt.

Bei diesem Teilelement des Reibrührwerkzeuges 30 handelt es sich um einen Körper 32, an dem eine Schulter 34 zum Aufpressen auf eine Oberfläche 22 der Werkstücke 10, 12 entlang des Verbindungsbereichs 14 vorgesehen ist.

Der Körper 32 mit der Schulter 34 wird, wie dies näher in der DE 10 2005 030 800 B4 beschrieben ist, zusammen mit einem gesondert vorgesehenen rotierend antreibbaren Stift 36 (auch Schweißstift oder Sonde genannt; siehe hierzu Fig. 4) zu dem Reibrührwerkzeug 30 zusammengesetzt. Dabei ist der Körper 32 relativ zu dem Stift 36 drehbar, sodass die Schulter 34 während des Reibrührvorganges nicht drehend festgehalten werden kann - d. h. es wird eine stehende Schulter 34 verwendet.

In den Figuren 2, 3 und 4 ist eine die Mittelachse 40 (fällt mit der Drehachse des Stifts zusammen) durch den Körper 32 einschließende Mittelebene 42 dargestellt, die den Körper 32 gedanklich in zwei Hälften aufteilt.

Die Schulter 34 weist die Reiboberfläche 44 auf, die auf der Oberfläche 22 der Werkstücke 10, 12 reibt.

Diese Reiboberfläche 44 ist in einen ersten Oberflächenbereich 46 auf der ersten Hälfte und einen zweiten Oberflächenbereich 48 auf der zweiten Hälfte aufgeteilt. In nicht dargestellten Ausführungsformen können auch noch weitere Oberflächenbereiche vorhanden sein.

In den in Fig. 3 und Fig. 4 dargestellten Ausführungsbeispielen des Reibrührwerkzeuges 30 ist die Schulter 34 mehrteilig ausgebildet, sodass die Oberflächenbereiche 46, 48 an unterschiedlichen Teilen der Schulter 34 ausgebildet sind.

Es ist eine Reibverminderungseinrichtung 50 vorgesehen, mit der der Reibwiderstand zumindest eines Teilbereichs der Reiboberfläche 44 beim Reiben über die Oberfläche 22 gegenüber einem Körper ohne Reibverminderungseinrichtung vermindert ist.

Die Reibverminderungseinrichtung 50 ist zur selektiven Verringerung des Reibwiderstandes auf einem Teilbereich der Reiboberfläche 44 ausgebildet.

Bei den in Fig. 3 und Fig. 4 dargestellten Ausführungsformen ist die Reibverminderungseinrichtung 50 dem ersten Oberflächenbereich 46 zugeordnet, sodass ein Reibwiderstand zwischen dem ersten Oberflächenbereich 46 und der Oberfläche 22 geringer ist, als ein Reibwiderstand zwischen dem zweiten Oberflächenbereich 48 und der Oberfläche 22.

Bei einer Ausgestaltung der Reibverminderungseinrichtung 50 ist hierzu der erste Oberflächenbereich 46 an einem Stützelement 52 ausgebildet, das weicher oder nachgiebiger ausgeführt ist, als ein Untergrund 54 des zweiten Oberflächenbereichs 48.

Beispielsweise ist das Stützelement 52 aus Kunststoff oder dergleichen Materialien gebildet, während der Untergrund 54 aus Metallmaterial und/oder Keramikmaterial gebildet ist.

Diese unterschiedlichen Materialien können durch die unterschiedlichen Teilelemente der Schulter 34 gebildet sein.

Beim Durchführen des Reibrührschweißverfahrens und Verbinden des ersten Werkstückes 10 und des zweiten Werkstückes 12 wird der Körper 32 mit der Schulter 34 dabei so ausgerichtet, dass der erste Oberflächenbereich 46 auf der Oberflächenbeschichtung 16 des ersten Werkstückes angreift, während der zweite Oberflächenbereich 48 auf der Oberfläche des zweiten Werkstückes 12 angreift. In dieser Orientierung wird das Reibrührwerkzeug 30 dann beim Reibrührschweißverfahren entlang des Verbindungsbereichs 14, z. B. der Verbindungslinie, verfahren, um so eine Schweißnaht 46 zu bilden.

In Fig. 3 ist die Größe des ersten Oberflächenbereichs 46 gleich der des zweiten Oberflächenbereichs 48, so dass die Reibverminderungseinrichtung 50 im Wesentlichen die Hälfte der Reiboberfläche 44 einnimmt.

In Fig. 4 ist eine Ausführungsform gezeigt, bei der der erste Oberflächenbereich 46 einen geringeren Teil der Reiboberfläche 44 einnimmt als der zweite Oberflächenbereich 48. Die Reibverminderungseinrichtung 50 nimmt hier beim Schweißvorgang im Wesentlichen nur den Bereich jenseits des zu bildenden Verbindungsbereichs 14 ein, wie dies hiernach noch näher erläutert ist.

In den Fig. 3 und 4 sind der erste Oberflächenbereich 46 und der zweite Oberflächenbereich 48 durch eine Trennlinie 57 getrennt. Die Oberflächenbereiche 46 und 48 sind beispielsweise mondförmig, sichelförmig oder ringsegmentförmig ausgebildet. Die Trennlinie 57 kann, wie in Fig. 3 gezeigt, mittig auf der Mittellinie der Reiboberfläche 44, d.h. auf der Mittelebene 42 liegen. Die Trennlinie 57 kann aber auch, wie in Fig. 4 gezeigt, um einen Abstand X von der Mittelebene 42 entfernt, vorzugsweise parallel dazu verlaufend, angeordnet sein. Es kann beispielsweise ein Sortiment von Reibrührwerkzeugen vorhanden sein, bei dem der Abstand X variiert. Die Auswahl des Reibrührwerkzeuges und dadurch die Auswahl des Abstandes X erfolgt abhängig von der Schweißaufgabe.

Das Reibrührwerkzeug 30 muss bei der Erzeugung einer Mischverbindung zwischen unterschiedlichen Werkstücken nicht mittig im Fügestoß positioniert sein. Zur Schonung des Reibrührwerkzeuges gegen Verschleiß verfährt man z.B. in Fällen einer Verbindung von Fügepartnern mit deutlich unterschiedlichen Schmelz- oder Erweichungstemperaturen derart, dass man das Werkzeug nur minimal in den jeweils härteren Fügepartner eindringen lässt. In solchen Fällen, z.B. bei Verschweißen von Werkstücken aus Stahl oder Titan einerseits mit einem Werkstück aus Leichtmetall wie Al-Legierung anderseits, erfolgt vorteilhaft ein Ansetzen und Verfahren des Reibrührwerkzeuges außermittig zur Verbindungslinie zwischen den Werkstücken. Entsprechend der jeweils vorteilhaften außermittigen Versetzung kann der Abstand X ausgewählt werden, was in Fig. 4 angedeutet ist.

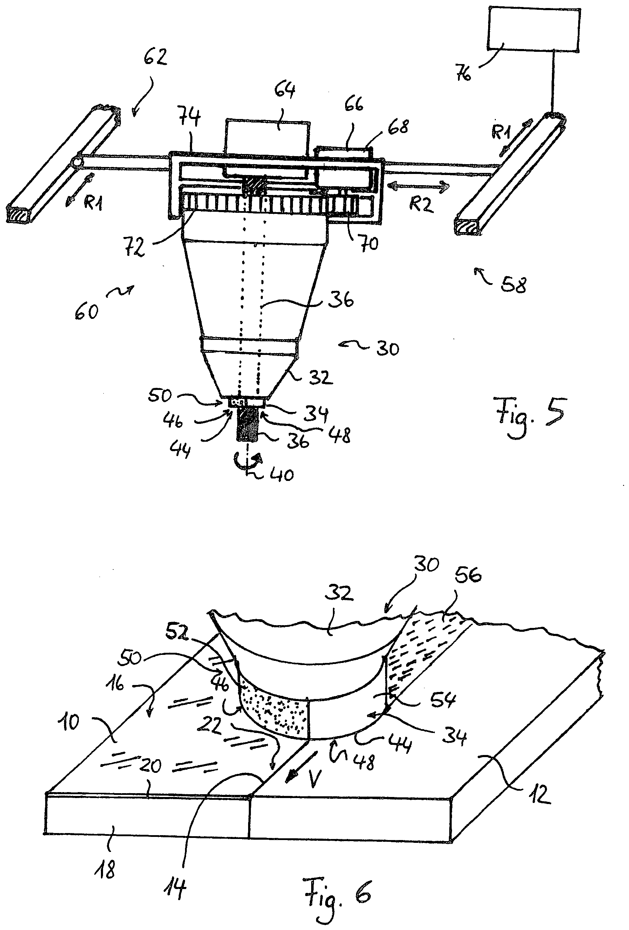

Fig. 5 zeigt zur Darstellung der Durchführung des Reibrührschweißverfahrens eine Reibrührvorrichtung 58 in Form einer Reibrührschweißvorrichtung 60, die das Reibrührwerkzeug 30 mit dem Körper 32 und dem relativ hierzu drehbar angetriebenen Stift 36 sowie eine Werkzeugführungseinrichtung 62 aufweist, mit der das Reibrührwerkzeug 30 in einer ersten Richtung R1 und einer zweiten Richtung R2 bewegbar ist, um es entlang dem Verbindungsbereich 14 zu führen. Selbstverständlich kann auch noch eine Höhenverstellung zum Verfahren des Reibrühwerkzeuges 30 in der dritten Dimension vorgesehen sein.

Die Reibrührschweißvorrichtung 60 weist weiter einen Drehantrieb 64 zum rotierenden Antreiben des Stiftes 36 - der auch als Schweißstift oder Sonde bezeichnet werden kann - und eine Schwenkeinrichtung 66 zum Ausrichten des Körpers 32 mit der Schulter 34 derart, dass der erste Oberflächenbereich 46 mit der verminderten Reibung auf der Oberflächenbeschichtung 16 aufsetzt, auf. Die Schwenkeinrichtung 66 weist einen Schrittmotor 68 auf, der über ein Zahnrad 70 und einen Zahnkranz 72 den Körper 32 in der passenden Stellung hält. Dies alles wird über eine Steuerung 76 gesteuert.

Drehantrieb 64, Stift 36 und Körper 32 sind an einem Gehäuse oder einem Rahmen 74 gehalten, der mittels der Werkzeugführungseinrichtung 62 in die jeweils gewünschten Richtungen R1 und R2 bewegbar ist.

Anstelle der in Fig. 5 dargestellten, einfachen Werkzeugführungseinrichtung 62 nach Art eines Portalkrans können selbstverständlich auch viele andere Werkzeugführungseinrichtungen 62 wie beispielsweise Roboterarme oder dergleichen eingesetzt werden.

Fig. 6 zeigt, wie das Reibrührwerkzeug 30 entlang dem Verbindungsbereich 14 in Vorschubrichtung V verfahren wird, wobei durch Drehen des Stiftes 36 das Plastifizieren des Werkstückmaterials und das Bilden der Schweißnaht 56 erfolgt. Dabei liegt der erste Oberflächenbereich 46 auf der Oberflächenbeschichtung 16 auf, während die vertikalen Prozesskräfte mehr über den zweiten Oberflächenbereich 48 übertragen werden.

Während das Reibrührwerkzeug 30 entlang dem Verbindungsbereich verfahren wird, richtet der Schwenkantrieb 66 das Reibrührwerkzeug 30 so aus, dass sich Mittelebene 42 im Wesentlichen parallel zur Vorschubrichtung V ertreckt. Es kann hierbei je nach Art der Materialien zu bevorzugen sein, dass der Stift 36 und damit die Mittelachse 40 und damit wiederum die Mittelebene 42 nicht genau mittig zum Verbindungsbereich 14 sondern in Richtung senkrecht zu der Vorschubrichtung versetzt zur Mitte des Verbindungsbereichs 14 angeordnet wird, z.B. so dass der Stift 36 in eines der Werkstücke 10, 12 nur minimal eindringt und mehr in das andere der Werkstücke 10,12 eindringt.

Hierzu wird vorher bei der Vorbereitung des Schweißverfahrens je nach vorteilhafter relativer Lage der Mittelebene 42 des Reibrührwerkzeuges 30 relativ zu dem Verbindungsbereich 14 - mittig oder mehr oder weniger außermittig - ein Reibrührwerkzeug 30 gemäß Fig. 3 oder Fig. 4 mit entsprechend passendem Abstand X ausgewählt und anschließend eingesetzt.

In einem konkreten Beispiel für die mehrteilige Schulter der Fig. 3 oder Fig. 4 ist das Stützelement 52 aus PTFE gebildet, während das zweite Element der Schulter 34, welches den Untergrund 54 bildet, aus Stahl gebildet ist.

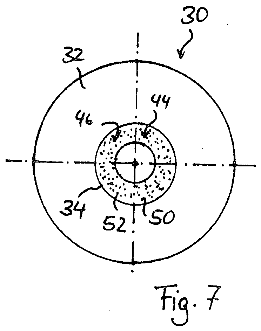

In dem nicht beanspruchten Beispiel der Fig. 7 ruht die Reiboberfläche 44 ganz auf dem ringförmigen Stützelement 52 aus PTFE.

Wenngleich das Reibrührwerkzeug 30 und die Reibrührvorrichtung 58 anhand des Beispieles eines Werkzeuges beziehungsweise einer Vorrichtung zum Durchführen eines Reibrührschweißverfahrens beschrieben worden ist, so ist die Anwendung nicht auf diesen Fall beschränkt. Es können auch andere Reibrührverfahren mit derartigen Reibrührwerkzeugen durchgeführt werden.

Im Folgenden werden die Vorteile der zuvor beschriebenen Ausführungen näher erläutert.

Bei der Anwendung eines Reibrührschweißprozesses an beschichteten Fügeteilen - Werkstücke 10, 12 - tritt eine Verletzung der Beschichtung durch die Schulter 34 eines bisher üblichen Schweißwerkzeuges auf. Bisher ist man derart vorgegangen, dass die Beschichtung der Fügeteile im Schweißnahtbereich nachträglich lokal erneut aufgebracht worden ist.

Wird dagegen eine Schulter an einem Körper 32 verwendet, wie er in den Figuren 2, 3 und 4 dargestellt ist, dann lässt sich die Oberflächenbeschichtung 16 durch eine Reibverminderung schonen. Insbesondere lässt sich somit ein Reibrührschweißen von verzinktem Stahl ohne Verletzung der Zinkschicht durchführen. Es wird vorzugsweise eine stehende Schulter 34 verwendet, die weicher ist, als die Zinkschicht.

Insbesondere bei Mischverbindungen zwischen Aluminium und Stahl ist es eine weitere bevorzugte Lösung, einen Teil der Schweißwerkzeug-Schulter 34 metallisch oder keramisch zu gestalten, um eine ausreichende vertikale Prozesskraft übertragen zu können, und einen weiteren Teil der Schulter 34 organisch, wie zum Beispiel aus PTFE zu bilden, um geringe Reibung zu generieren und die Oberfläche des einen Fügepartners zu schonen.

Es sind keine Nacharbeitungen der Schweißung zwecks Erneuerung einer vorherigen Beschichtung mehr notwendig.

Insbesondere wird bei einer Ausführungsform ein Körper 32 eines Reibrührwerkzeuges 30 mit einer mehrteiligen Schulter 34 vorgeschlagen. Die Verteilung der einzelnen Teile auf der Schulter 34 wird entsprechend der zu lösenden Schweißaufgabe gewählt. Je nach durchzuführenden Schweißaufgaben kann eine mittige Trennlinie 57 oder eine außermittige Trennlinie 57 mit vorteilhaft zu bestimmenden Abstand X von der Mittelebene 42 auszuwählen sein. Ein Kriterium für die Auswahl ist, dass eine Oberflächenbeschichtung 16 möglichst rein durch Kontakt mit reibverminderter Reiboberfläche geschont wird und erhalten bleibt, während unempfindliche Werkstückoberflächen und/oder der plastifizierte Bereich durch eine auf möglichst hohe Druckübertragung optimierte Reiboberfläche kontaktiert werden kann.

Anwendung findet das Reibrührschweißverfahren insbesondere im Bau von Luftfahrzeugen, wo Werkstücke mit unterschiedlichen Materialeigenschaften miteinander zu verbinden sind. Auch im Fahrzeugbau besteht mehr und mehr das Bedürfnis, Stahlteile und Aluminiumteile untereinander zu verbinden. Dies ist mit dem hier vorgeschlagenen Werkzeug nun einfacher als bisher möglich.

### Bezugszeichenliste

- 10: erstes Werkstück
- 12: zweites Werkstück
- 14: Verbindungsbereich
- 16: Oberflächenbeschichtung
- 18: Stahlblech
- 20: Zinkschicht
- 22: Oberfläche
- 30: Reibrührwerkzeug
- 32: Körper
- 34: Schulter
- 36: Stift
- 40: Mittelachse
- 42: Mittelebene
- 44: Reiboberfläche
- 46: erster Oberflächenbereich
- 48: zweiter Oberflächenbereich
- 50: Reibverminderungseinrichtung
- 52: Stützelement
- 54: Untergrund
- 56: Schweißnaht
- 57: Trennlinie
- 58: Reibrührvorrichtung
- 60: Reibrührschweißvorrichtung
- 62: Werkzeugführungseinrichtung
- 64: Drehantrieb
- 66: Schwenkeinrichtung
- 68: Schrittmotor
- 70: Zahnrad
- 72: Zahnkranz
- 74: Rahmen
- 76: Steuerung
- R1: erste Richtung
- R2: zweite Richtung
- V: Vorschubrichtung
- X: Abstand zwischen Trennlinie und Mittelebene

## Patentansprüche

1. Reibrührwerkzeug (30) mit einer an einem Körper (32) ausgebildeten Schulter (34), die eine Reiboberfläche (44) zum Anpressen an wenigstens ein wenigstens teilweise mit einer Oberflächenbeschichtung (16) versehenes Werkstück (10, 12) hat, und einer Reibverminderungseinrichtung (50) zur Verminderung eines Reibwiderstandes zwischen der Oberflächenbeschichtung (16) und der Reiboberfläche (44), **dadurch gekennzeichnet,**
**dass** die Reiboberfläche (44) einen ersten (46) und einen zweiten (48) Oberflächenbereich umfasst, wobei der erste Oberflächenbereich (46) auf einem ersten Teilelement der Schulter (34) ausgebildet ist und der zweite Oberflächenbereich (48) auf einem zweiten Teilelement der Schulter ausgebildet ist,
**dass** das erste Teilelement mit dem ersten Oberflächenbereich (46) von dem zweiten Teilelement mit dem zweiten Oberflächenbereich (48) durch eine Trennlinie (57) getrennt ist, die auf einer in einer Vorschubrichtung (V) für das Reibrührwerkzeug (30) anordenbaren Mittellinie der Reiboberfläche (44) mittig zu der Reiboberfläche (44) verläuft oder außermittig zu der Reiboberfläche (44) parallel zu der Mittellinie derart verläuft, dass der zweite Oberflächenbereich (48) sich um einen vorgegebenen Abstand (X) über die Mittellinie der Reiboberfläche (44) hinaus erstreckt, und
**dass** das erste und das zweite Teilelement der Schulter (34) unterschiedliche Materialien aufweisen, so dass der Reibwiderstand an dem ersten Oberflächenbereich (46) der Reiboberfläche (44) geringer als der Reibwiderstand an dem zweiten Oberflächenbereich (48) der Reiboberfläche (44) ist.

2. Reibrührwerkzeug (30) nach Anspruch 1, **dadurch gekennzeichnet,**
**dass** der erste Oberflächenbereich (46) an einem aus einem Kunststoffmaterial gebildeten Bereich des Körpers (32) ausgebildet ist und der zweite Oberflächenbereich (48) an einem Metall- und/oder Keramikmaterial ausgebildeten Bereich des Körpers (32) ausgebildet ist.

3. Reibrührwerkzeug (30) nach einem der voranstehenden Ansprüche, **dadurch gekennzeichnet,**
**dass** ein von der Schulter (34) vorstehender, rotierend antreibbarer Stift (36) vorgesehen ist, der relativ zu der Schulter (34) drehbar ist.

4. Reibrührwerkzeug (30) nach Anspruch 3, **dadurch gekennzeichnet, dass** die Schulter (34) dazu ausgebildet ist, während eines Reibrührschweißverfahrens zum Verbinden eines ersten (10) und eines zweiten (12) Werkstückes entlang einer Schweißnaht (56) mit einer Drehzahl n=0 auf die Oberfläche (22) des ersten (10) und/oder des zweiten (12) Werkstückes aufgepresst zu werden.

5. Reibrührvorrichtung (58), umfassend ein Reibrührwerkzeug (30) nach einem der voranstehenden Ansprüche und eine Werkzeugführungseinrichtung (62) zum Führen und Bewegen des Reibrührwerkzeuges (30) in die Vorschubrichtung.

6. Reibrührverfahren zum Durchführen eines Reibrührprozesses an wenigstens einem mit einer Oberflächenbeschichtung (16) versehenen Werkstück (10, 12), mit:
Verwenden eines Reibrührwerkzeugs (30) nach einem der Ansprüche 1 bis 4 und/oder einer Reibrührvorrichtung(58) nach Anspruch 5, wobei die Schulter (34) abhängig von der Oberflächenbeschichtung (16) ausgewählt und/oder ausgebildet wird.

7. Reibrührverfahren nach Anspruch 6, **dadurch gekennzeichnet, dass** das Reibrührverfahren ein Reibrührschweißverfahren zum Verbinden eines ersten Werkstücks (10) und eines zweiten Werkstückes (12) mittels Reibrühren entlang einer Schweißnaht (56) ist, wobei das erste Werkstück (10) mit einer Oberflächenbeschichtung (16) versehen ist, und dass das Reibrührverfahren weiter umfasst:
Erfassen der Oberflächenbeschichtung (16) mit dem ersten Oberflächenbereich (46) und Übertragen von axialen Kräften auf das zweite Werkstück (12) mittels des zweiten Oberflächenbereichs (48).

8. Reibrührschweißverfahren nach Anspruch 7, **gekennzeichnet durch** Verbinden eines aus verzinktem Stahl gebildeten ersten Werkstücks (10) mit einem aus einem Leichtmetall gebildeten zweiten Werkstück (12) entlang der Schweißnaht (56) unter Pressen des ersten Oberflächenbereichs (46) auf die Zinkschicht (20) des ersten Werkstücks (10) und Pressen des zweiten Oberflächenbereichs (48) auf das Leichtmetall des zweiten Werkstücks. (12)

9. Reibrührschweißverfahren nach einem der Ansprüche 7 oder 8 **gekennzeichnet durch**
Durchführen des Reibrührschweißverfahren mit einem relativ zur Schweißnaht (56) zum zweiten Werkstück (12) hin versetzt entlang der Schweißnaht (56) zu verfahrenden Reibrührwerkzeug (30), wobei die Verteilung der Oberflächenbereiche (46, 48) in Abhängigkeit von den zu verbindenden Materialien derart gewählt wird, dass sich die zwischen den Oberflächenbereichen (46, 48) gebildete Trennlinie an der Schweißnaht (56) halten lässt.

## Claims

1. Friction stir processing tool, comprising a shoulder (34) formed on a body (32), the shoulder including a friction surface (44) configured to press against at least one workpiece (10, 12) that is at least partially provided with a surface coating (16), and a friction reducing unit (50) configured to reduced a friction resistance between the surface coating (16) and the friction surface (44), **characterized in**
**that** the friction surface (44) comprises a first (46) and a second (48) surface region, wherein the first surface region (46) is formed on a first partial element of the shoulder (34) and the second surface region (48) is formed on a second partial element of the shoulder,
**that** the first partial element having the first surface region (46) is separated from the second partial element having the second surface region (48) by a partition line which extends centrally in relation to the friction surface (44) or off-center in relation to the friction surface (44), on a center line of the friction surface (44), which can be arranged in an advance direction (V) for the friction stir processing tool, and parallel to the center line, so that the second surface region (48) extends by predefined distance (X) beyond the center line of the friction surface (44), and
**that** the first and the second partial element of the shoulder (34) comprise different materials so that the friction resistance on the first surface region (46) of the friction surface (44) is less than the friction resistance on the second surface region (48) of the friction surface (44).

2. Friction stir processing tool (30) according to claim 1,
**characterized in that** the first surface region (46) is implemented on a region of the body (32) formed from a plastic material and that the second surface region (48) is implemented on a region of the body (32) formed from a metal or ceramic material.

3. Friction stir processing tool (30) according to one of the preceding claims, **characterized in that** a pin (36) is provided, which protrudes from the shoulder (34) and is rotatable in relation to the shoulder (34).

4. Friction stir processing tool (30) according to claim 3,
**characterized in that** the shoulder (34) is arranged so that, during a friction stir processing method for connecting a first (10) and a second (12) workpiece along a weld seam (56), the shoulder is pressed onto the surface (22) of the first (10) and/or the second (12) workpiece at a rotational speed n=0.

5. Friction stir processing device (58), comprising a friction stir processing tool (30) according to any one of the preceding claims and a tool guiding unit (62) for guiding a moving the friction stir processing tool (30) in an advance direction.

6. Friction stir processing method for carrying out a friction stir process on at least one workpiece (10, 12) provided with a surface coating (16), comprising:
using a friction stir processing tool (30) according to any one of the claims 1 to 4,
and/or a friction stir processing device (58) according to claim 5, wherein the shoulder (34) is selected and/or implemented depending on the surface coating (16).

7. Friction stir processing method according to claim 6,
**characterized in that** friction stir processing method is a friction stir welding method for connecting a first workpiece (10) and a second workpiece (12) by means of friction stir processing along a weld seam (56), wherein the first workpiece (10) is provided with a surface coating (16), and the friction stir processing method further comprises:
engaging the surface coating (16) using the first surface region (46) and transferring axial forces to the second workpiece (12) the second surface region (48).

8. Friction stir welding method according to claim 7,
**characterized by** connecting a first workpiece (10) formed from galvanized steel to a second workpiece (12) formed from a light metal along the weld seam (56) while pressing the first surface region (46) against a zinc layer (20) of the first workpiece (10) and pressing the second surface region (48) against the light metal of the second workpiece (12).

9. Friction stir welding method according to one of the claims 7 or 8,
**characterized by** performing the friction stir welding method using a friction stir processing tool (30), which is moved along the weld seam (56) offset in relation to the weld seam (56), wherein the distribution of the surface regions (46, 48) is selected as a function of the materials to be connected such that a partition line formed between the surface regions (46, 48) may be kept on the weld seam (56).

## Revendications

1. Outil d'agitation-friction (30) comprenant un épaulement (34) réalisé sur un corps (32), ledit épaulement comportant une surface de friction (44) destinée à être pressée contre au moins une pièce à oeuvrer (10, 12) au moins partiellement pourvue d'un revêtement de surface (16), et un moyen de réduction de friction (50) destiné à réduire une résistance de friction entre le revêtement de surface (16) et la surface de friction (44),
**caractérisé en ce que**
la surface de friction (44) inclut une première zone de surface (46) et une seconde zone de surface (48), telles que la première zone de surface (46) est réalisée sur un premier élément partiel de l'épaulement (34) et que la seconde zone de surface (48) est réalisée sur un second élément partiel de l'épaulement,
**en ce que** le premier élément partiel avec la première zone de surface (46) est séparé du second élément partiel avec la seconde zone de surface (48) par une ligne de séparation (57) qui s'étend au milieu par rapport à la surface de friction (44) sur une ligne médiane, à agencer dans une direction d'avance (V) pour l'outil d'agitation-friction (30), de la surface de friction (44) ou qui s'étend de façon décentrée par rapport à la surface de friction (44) parallèlement à la ligne médiane, de telle façon que la seconde zone de surface (48) s'étend sur une distance prédéterminée (X) au-delà de la ligne médiane de la surface de friction (44), et
**en ce que** le premier élément partiel et le second élément partiel de l'épaulement (34) comportent des matériaux différents, de sorte que la résistance de friction au niveau de la première zone de surface (46) de la surface de friction (44) est plus faible que la résistance de friction au niveau de la seconde zone de surface (48) de la surface de friction (44).

2. Outil d'agitation-friction (30) selon la revendication 1,
**caractérisé en ce que** la première zone de surface (46) est réalisée sur une région du corps (32) formée d'une matière plastique, et **en ce que** la seconde région de surface (48) est réalisée sur une région du corps (32) formée d'un matériau métallique ou d'un matériau céramique.

3. Outil d'agitation-friction (30) selon l'une des revendications précédentes, **caractérisé en ce qu'**il est prévu une tige (36), qui dépasse de l'épaulement (34) et qui peut être entraînée en rotation, laquelle est capable de rotation par rapport à l'épaulement (34).

4. Outil d'agitation-friction (30) selon la revendication 3,
**caractérisé en ce que** l'épaulement (34) est réalisé, pendant une procédure de soudage par agitation-friction en vue de relier une première pièce à oeuvrer (10) et une seconde pièce à oeuvrer (12), pour être pressé avec une vitesse de rotation n=0 sur la surface (22) de la première pièce à oeuvrer (10) et/ou de la seconde pièce à oeuvrer (12) le long d'un cordon de soudure (56).

5. Dispositif d'agitation-friction (58) incluant un outil d'agitation-friction (30) selon l'une des revendications précédentes et un moyen de guidage d'outil (62) pour guider et pour déplacer l'outil d'agitation-friction (30) dans la direction d'avance.

6. Procédé d'agitation-friction pour mettre en oeuvre une procédure d'agitation-friction sur au moins une pièce à oeuvrer (10, 12) pourvu d'un revêtement de surface (16), comprenant l'utilisation d'un outil d'agitation-friction (30) selon l'une des revendications 1 à 4 et/ou d'un dispositif d'agitation-friction (58) selon la revendication 5, dans lequel l'épaulement (34) est choisi et/ou réalisé en fonction du revêtement de surface (16).

7. Procédé d'agitation-friction selon la revendication 6,
**caractérisé en ce que** le procédé d'agitation-friction est un procédé de soudage par agitation-friction destiné à relier une première pièce à oeuvrer (10) et une seconde pièce à oeuvrer (12) au moyen d'une agitation-friction le long d'un cordon de soudure (56), dans lequel la première pièce à oeuvrer (10) est dotée d'un revêtement de surface (16), et le procédé d'agitation-friction inclut l'opération consistant à attaquer le revêtement de surface (16) avec la première zone de surface (46) et à transmettre des forces axiales sur la seconde pièce à oeuvrer (12) au moyen de la seconde zone de surface (48).

8. Procédé de soudage par agitation-friction selon la revendication 7,
**caractérisé par** l'étape consistant à relier une première pièce à oeuvrer (10) formée en acier zingué avec une seconde pièce à oeuvrer (12) formée en métal léger le long du cordon de soudure (56) en pressant la première zone de surface (46) sur la couche de zinc (20) de la première pièce à oeuvrer (10) et en pressant la seconde zone de surface (48) sur le métal léger de la seconde pièce à oeuvrer (12).

9. Procédé de soudage par agitation-friction selon l'une des revendications 7 ou 8,
**caractérisé en ce que** l'on met en oeuvre le procédé de soudage par agitation-friction avec un outil d'agitation-friction (30) à déplacer le long du cordon de soudure (56) en décalage par rapport au cordon de soudure (56) vers la seconde pièce à oeuvrer (12), et la répartition des zones de surface (46, 48) est choisie en fonction des matériaux qu'il s'agit de relier de telle façon que la ligne de séparation formée entre les zones de surface (46, 48) se laisse maintenir au niveau du cordon de soudure (56).
